(19) Europäisches Patentamt
European Patent Office
Office européen des brevets

(11) **EP 2 856 424 B1**

(12) **FASCICULE DE BREVET EUROPEEN**

(45) Date de publication et mention de la délivrance du brevet:
**10.10.2018 Bulletin 2018/41**

(21) Numéro de dépôt: **13724838.1**

(22) Date de dépôt: **24.05.2013**

(51) Int Cl.:
**G06T 7/00** (2017.01)     **G01B 11/245** (2006.01)

(86) Numéro de dépôt international:
**PCT/EP2013/060701**

(87) Numéro de publication internationale:
**WO 2013/178540 (05.12.2013 Gazette 2013/49)**

(54) **PROCEDE DE MESURES TRIDIMENSIONNELLES PAR STEREO-CORRELATION UTILISANT UNE REPRESENTATION PARAMETRIQUE DE L'OBJET MESURE**

VERFAHREN FÜR DREIDIMENSIONALE MESSUNGEN DURCH STEREOKORRELATION UNTER VERWENDUNG EINER PARAMETRISCHEN DARSTELLUNG DES GEMESSENEN OBJEKTS

METHOD OF THREE-DIMENSIONAL MEASUREMENTS BY STEREO-CORRELATION USING A PARAMETRIC REPRESENTATION OF THE MEASURED OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.06.2012 FR 1255093**

(43) Date de publication de la demande:
**08.04.2015 Bulletin 2015/15**

(73) Titulaires:
• **Centre National de la Recherche Scientifique (C.N.R.S.)**
**75016 Paris (FR)**
• **Ecole Normale Supérieure de Cachan**
**94235 Cachan Cedex (FR)**

(72) Inventeurs:
• **HILD, François**
**F-92290 Chatenay Malabry (FR)**
• **ROUX, Stéphane**
**F-93110 Rosny-sous-Bois (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**WO-A1-2009/157895     US-A1- 2008 123 937**

• **TETSUO MIYAKE ET AL: "Online Stereo Measurement System for a Sand Mold", SICE-ICCAS 2006 INTERNATIONAL JOINT CONFERENCE, IEEE, PISCATAWAY, NJ, USA, 1 octobre 2006 (2006-10-01), pages 4047-4050, XP031049974, ISBN: 978-89-950038-4-8**
• **CORDES K ET AL: "Extrinsic Calibration of a Stereo Camera System Using a 3D CAD Model Considering the Uncertainties of Estimated Feature Points", VISUAL MEDIA PRODUCTION, 2009. CVMP '09. CONFERENCE FOR, IEEE, PISCATAWAY, NJ, USA, 12 novembre 2009 (2009-11-12), pages 135-143, XP031648071, ISBN: 978-1-4244-5257-6**

**Description**

Le domaine général de l'invention est celui des procédés de mesures tridimensionnelles d'objets par des moyens optiques, ces procédés présentant l'avantage d'une mesure sans contact avec l'objet. Plus précisément, le domaine de l'invention est celui des procédés utilisant la stéréocorrélation. Ces procédés sont également connus sous l'acronyme «3D-DIC» signifiant « Three Dimensions Digital Image Correlation».

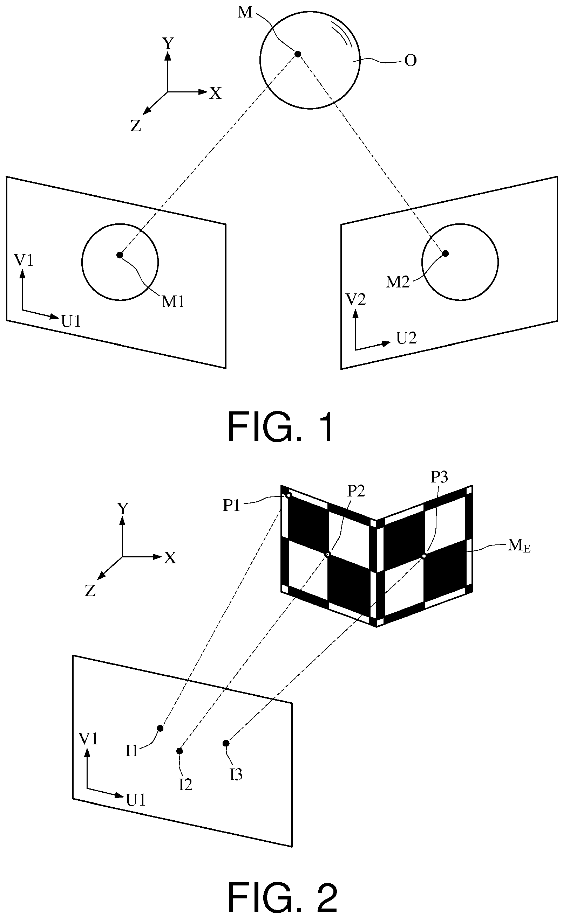

De façon générale, les procédés de stéréo-corrélation nécessitent au moins deux caméras de prise de vues permettant de prendre des images de l'objet à mesurer sous deux angles différents et des moyens d'analyse et de traitement des images issues de ces deux caméras. Le principe de la mesure est illustrée en figure 1. La surface d'un objet O est représentée par un ensemble de points M ayant des coordonnées (x,y,z) dans un repère (X, Y, Z) lié à l'objet. Dans le repère (U1, V1) du plan-image de la première caméra, l'image du point M est en M1 de coordonnées (u1, v1) et dans le repère (U2, V2) du plan-image de la seconde caméra, l'image du point M est en M2 de coordonnées (u2, v2). Connaissant les deux matrices de passage entre le repère (X, Y, Z) et les repères (U1, V1) et (U2, V2), il est alors possible de trouver les coordonnées de chaque point M de l'objet, connaissant les coordonnées de ses deux projections M1 et M2 dans les plans images des deux caméras.

A ces changements de repères qui sont des paramètres extrinsèques s'ajoutent des quantités intrinsèques telles que les focales des optiques des caméras, les paramètres d'échelle ou encore les coordonnées des points focaux qui caractérisent chaque moyen de prise d'image utilisé. Ces deux ensembles de paramètres doivent être connus afin de pouvoir reconstruire les formes tridimensionnelles surfaciques de l'objet. On peut noter que les deux ensembles de paramètres peuvent être regroupés pour définir la matrice de passage associée à chaque caméra ; cette dernière étant déterminée sans nécessairement devoir distinguer les paramètres intrinsèques et extrinsèques.

Les procédés de stéréocorrélation comportent deux étapes principales qui sont d'une part une étape d'étalonnage ou de calibration et d'autre part, une étape dite d'appariement spatial permettant la détermination des caractéristiques géométriques de l'objet mesuré. Ces deux premières étapes peuvent être suivies d'une troisième étape de suivi des caractéristiques géométriques dans le temps. Cette dernière étape est utile lorsque l'objet subit un traitement susceptible d'entraîner des déformations, par exemple, lorsque l'on soumet l'objet à un essai de résistance mécanique ou lors d'un procédé de fabrication ou d'assemblage.

Comme on l'a vu au paragraphe précédent, il est indispensable de parfaitement connaître le lien existant entre le repère de l'objet et les repères des plans images des deux caméras. Pour réaliser cette étape d'étalonnage, on utilise un calibre, une mire d'étalonnage tridimensionnelle dont la géométrie est parfaitement connue. A titre d'exemple, la figure 2 représente l'étalonnage du plan-image de la caméra 1. La mire d'étalonnage $M_E$ est constituée d'une ou de deux surfaces planes faisant entre elles un angle connu. Chaque surface est couverte de formes géométriques remarquables noires et blanches qui peuvent être, par exemple des rectangles ou des disques. Ainsi, la mire de la figure 2 est couverte d'un damier noir et blanc.

Sur l'exemple de la figure 2, trois points du damier P1, P2 et P3 de position connue donnent trois images projetées I1, I2 et I3 de position connue dans le plan-image de la caméra 1. On démontre qu'au moins huit points d'étalonnage sont nécessaires pour obtenir un étalonnage du système de mesure, c'est-à-dire la détermination les éléments des matrices de passage. Les optiques des caméras n'étant pas parfaitement semblables et comportant des aberrations optiques, la phase d'étalonnage peut introduire également des corrections d'aberration pour chaque caméra et nécessite alors un plus grand nombre de points de mesure. Cette phase est nécessairement lourde si l'on souhaite obtenir une grande précision de mesure dans un volume de mesure donné.

La fonction de l'étape d'appariement spatial consiste à retrouver dans les deux plan-image les deux points de projection M1 et M2 correspondant à un même point objet M. Ces points étant déterminés, on peut alors retrouver les coordonnées tridimensionnelles du point M. Différentes méthodes sont mises en oeuvre pour réaliser cet appariement. Elles sont basées sur un code de Corrélation d'Images Numériques, aussi connu sous les acronymes français «CIN» ou anglais «DIC».

Il existe différents types de codes CIN. Un premier type consiste à réaliser des corrélations locales entre les deux images d'un même objet de façon à détecter pour un point M1 appartenant au premier plan-image le point M2 de correspondance dans la seconde image. Pour réaliser cette corrélation, les images sont découpées en « imagettes » de petites dimensions. Ainsi, une imagette peut être un carré comportant, par exemple, 16x16 pixels. A une première imagette déterminée appartenant au premier plan-image, on cherche la seconde imagette correspondante dans le second plan-image. Compte-tenu que les imagettes sont de petite dimension, il est possible de considérer que la seconde imagette est obtenue par une transformation simple de la première imagette, c'est-à-dire une translation, et souvent un gradient de déplacement constant sur l'imagette, voire éventuellement des transformations plus complexes. On simplifie ainsi de façon importante les calculs de corrélation compte-tenu du caractère local de l'analyse. Cependant, cette méthode, par nature, ne prend pas en compte les transformations plus complexes que celles utilisées dans l'analyse mais susceptibles d'exister entre les deux imagettes. De plus, la régularité du champ de déplacement, qui se traduit, par exemple, par la continuité, la différentiabilité existant entre imagettes contigües, n'est pas prise en compte.

On comprend bien que, pour obtenir une grande résolution spatiale, on réduit les dimensions des imagettes, mais ce faisant, la corrélation devient plus sensible au bruit, et la détermination des matrices de passage devient plus incertaine.

Un second type de code CIN consiste à réaliser une corrélation globale entre les deux images. Dans ce cas, on cherche à déterminer l'ensemble du champ de déplacement existant entre les deux images de façon à obtenir la différence la plus faible possible entre les deux images. Pour réaliser cette étape, on considère que les deux images sont décrites par des variations de niveaux de gris, qui sont fonction des coordonnées spatiales prises dans les deux plans image. On note $f(x)$ et $g(x)$ ces deux images, $x$ représentant les coordonnées des points appartenant aux deux images. On considère alors que la seconde image est égale à la première image à un champ de déplacement près noté $u(x)$. On a alors la relation générale :

$$f(x) = g\big[x + u(x)\big] \qquad\qquad \text{Relation 1}$$

Le champ de déplacement $u(x)$ est déterminé en minimisant dans tout le volume de l'objet la différence quadratique existant entre les deux membres de la relation 1, le champ de déplacement étant décomposé sur une base de fonctions adaptées.

Pour avoir plus d'informations sur cette méthode, on se reportera, en particulier, à un premier article intitulé « «Finite-element » displacement fields analysis from digital images : Application to Portevin-Le Châtelier bands », publié dans « Experimental Mechanics 46(2006) 789-804 » dont les auteurs sont Gilles Bernard, François Hild et Stéphane Roux et également à un second article intitulé « Characterization of necking phenomena in high speed experiments by using a single camera», publié dans « EURASIP Journal on Image and Video Processing 2010 (2010) 215956» dont les auteurs sont Gilles Bernard, Jean-Michel Lagrange, François Hild, Stéphane Roux et Christophe Voltz. Dans ces deux articles, le premier sur la CIN, le second sur son exploitation dans le cadre de la stéréo-corrélation, la base de champs cinématiques choisie pour la décomposition du champ de déplacement sont les fonctions de forme Q4P1 d'un maillage carré régulier.

Cette méthode de corrélation globale nécessite des moyens de calcul plus importants que la précédente mais offre des précisions supérieures.

Cependant, ces méthodes, même si elles donnent des performances globalement satisfaisantes pour les utilisateurs, présentent certains inconvénients. On citera notamment une certaine complexité de la phase d'étalonnage, des résultats de mesure sous forme de nuages de points qu'il faut ensuite remettre en forme, la nécessité de recourir à un filtrage ou à une projection sans pouvoir juger et quantifier la perte de fidélité entraînée, une certaine sensibilité au bruit de mesure et enfin, une difficulté à appréhender la qualité de la mesure obtenue en l'absence de toute référence.

Ces difficultés viennent en partie du fait que les mesures sont faites a priori, sans aucune connaissance préalable de la forme et de la géométrie de l'objet. Or, aujourd'hui, la très grande majorité des objets industriels sont conçus et réalisés à partir de logiciels de conception assistée par ordinateur connus sous l'acronyme français de « CAO », logiciels aussi appelés « Computer Aided Design » connus sous l'acronyme anglais de « CAD ». On possède donc naturellement une représentation paramétrique de l'objet à mesurer. Le coeur du procédé de stéréo-corrélation selon l'invention est d'utiliser cette représentation paramétrique soit pendant l'étape d'étalonnage, soit pendant l'étape de mesure, soit pendant les deux, l'objet à mesurer étant son propre calibre. Par nature, le procédé selon l'invention s'apparente aux codes CIN de corrélation globale.

D1 : US20080123937 décrit un appareil et une méthode de mesures tridimensionnelles d'un objet par stéréo-corrélation comportant une première étape d'étalonnage et une seconde étape d'appariement spatial.

D2: "Online Stereo Measurement System for a Sand Mold", T.Miyake etal. in SICE-ICASE International Joint Conférence 2006, divulgue l'emploi d'un modèle CAD lors de la seconde étape d'appariement spatial.

Plus précisément, l'invention a pour objet un procédé de mesures tridimensionnelles d'un objet par stéréo-corrélation, ledit procédé étant mis en oeuvre par au moins deux caméras reliées à des moyens de traitement d'images, lesdites caméras étant positionnées de façon à donner une première image et une seconde image de l'objet vu sous au moins deux angles différents, les moyens de traitement d'images agencés de façon à déterminer tout ou partie des coordonnées tridimensionnelles dudit objet, ledit procédé comportant au moins deux étapes :

- Une première étape d'étalonnage dans laquelle un calibre de forme connue étant disposé dans le champ des caméras, les moyens de traitement calculent les deux matrices de passage liant les coordonnées tridimensionnelles prises dans le repère du calibre aux coordonnées bidimensionnelles prises dans les deux repères de la première image et de la seconde image et éventuellement les corrections d'aberration ;
- Une seconde étape d'appariement spatial dans laquelle l'objet à mesurer étant disposé dans le champ des caméras, les moyens de traitement déterminent directement la forme tridimensionnelle de l'objet dans sa représentation CAO en exploitant l'appariement des deux images ;

caractérisé en ce que, la surface de l'objet possédant une représentation paramétrique, c'est-à-dire une représentation mathématique de la surface de l'objet ayant la forme d'une décomposition sur une base de fonctions scalaires, ladite représentation paramétrique est mise en oeuvre lors de la première étape d'étalonnage et lors de la seconde étape d'appariement spatial.

Avantageusement, le procédé comporte une troisième étape d'appariement temporel pendant laquelle une pluralité de couples de premières et de secondes images sont enregistrées simultanément à des instants différents et traitées par les moyens de traitement des images, la représentation paramétrique étant également mise en oeuvre lors de la troisième étape d'appariement temporel.

Avantageusement, lors de la première étape d'étalonnage, l'objet est son propre calibre.

Avantageusement, le calibre comporte un motif composé de taches blanches et noires de forme et de répartition déterministe ou aléatoire.

Avantageusement, la première image étant décrite par une première fonction dépendant des coordonnées spatiales prises dans le premier plan image et la seconde image étant décrite par une seconde fonction dépendant des coordonnées spatiales prises dans le second plan image, la première et la seconde fonction étant représentatives de la variation des niveaux de gris en chaque point du premier et du second plan-image, l'optimisation des coefficients des deux matrices de passage est effectuée au moyen d'un algorithme dont la fonction est de minimiser le résidu de corrélation existant entre la première fonction et la seconde fonction, le champ de déplacement apparent sur chaque image étant calculé sur la base de fonctions scalaires de la représentation paramétrique de la surface de l'objet et du modèle projectif dudit objet.

Avantageusement, la représentation paramétrique est composée de splines ou de B-splines ou de NURBS ou est une représentation de Bézier, et la base de fonctions scalaires est constituée de polynômes de Bernstein.

L'invention sera mieux comprise et d'autres avantages apparaîtront à la lecture de la description qui va suivre donnée à titre non limitatif et grâce aux figures annexées parmi lesquelles :

La figure 1 déjà commentée représente le principe général de la mesure tridimensionnelle par stéréocorrélation ;

La figure 2 déjà commentée représente le principe général de l'étape d'étalonnage dans un procédé de mesure par stéréocorrélation ;

La figure 3 représente un exemple de calibre utilisé dans un procédé de mesure par stéréocorrélation selon l'invention ;

La figure 4 représente les différentes sous-étapes d'un étalonnage dans un procédé de mesure par stéréocorrélation selon l'invention.

Comme il a été dit, le procédé de stéréocorrélation selon l'invention met en oeuvre une représentation paramétrique de l'objet pendant l'étape d'étalonnage et pendant l'étape de mesure, l'objet à mesurer pouvant être son propre calibre. La représentation paramétrique est principalement issue des logiciels de conception assistée par ordinateur.

Les avantages de cette méthode sont les suivants. L'étalonnage peut être réalisé à partir d'une seule paire d'images, ce qui simplifie le mode opératoire. L'objet mesuré est décrit dans le même langage que celui qui a permis sa définition. On peut ainsi plus facilement quantifier l'écart ou l'erreur existant entre l'objet réel et sa définition numérique.

A titre d'exemple non limitatif de mise en oeuvre du procédé selon l'invention, une étape d'étalonnage selon l'invention d'un système de mesures tridimensionnelles d'un objet par stéréocorrélation est détaillée ci-dessous.

Le calibre est conçu et réalisé au moyen d'un logiciel de CAD couplé à logiciel de fabrication assistée par ordinateur ou FAO ou CAM pour l'acronyme anglais. Dans cet exemple, sa représentation paramétrique est un carreau de Bézier, la base de fonctions scalaires étant constituée de polynômes de Bernstein. Plus précisément, sa représentation $S(u,v)$ vaut :

$$S(u,v) = \sum_{i=o}^{m} \sum_{j=0}^{n} B_{im}(u) B_{jn}(v) P_{ij} \text{ avec } (u,v) \in [0,1]^2$$

dans laquelle $(u,v)$ sont les coordonnées paramétriques, $B_{im}$ et $B_{jn}$ sont des polynômes de Bernstein de degré $m$ et $n$ vérifiant la relation suivante :

$$B_{im}(u) = \frac{m!}{i!(m-i)!} u^i (1-u)^{m-i}$$

De telles représentations sont notamment mises en oeuvre dans des versions légèrement plus complexes par le logiciel de marque CATIA commercialisé par la société Dassault Systèmes.

On peut utiliser d'autres représentations paramétriques. On citera, à titre d'exemples, les fonctions splines, les fonctions B-splines ou encore les fonctions B-splines rationnelles non uniformes, plus communément désignées par leur acronyme anglais « NURBS » signifiant « Non-Uniform Rational Basis Splines ».

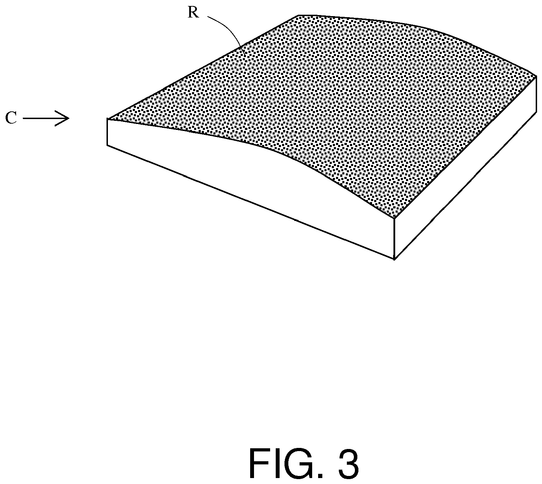

Le calibre comporte un motif composé de taches blanches et noires. La forme des taches peut être soit un motif déterministe, soit une répartition aléatoire. Dans le cas présent, elles sont déposées aléatoirement par un spray de peinture. La figure 3 représente un exemple d'un tel calibre C avec son revêtement moucheté R.

Deux caméras permettent de prendre des vues de l'objet à mesurer sous deux angles différents. On peut, bien entendu utiliser un nombre plus important de caméras et les apparier deux à deux soit pour obtenir plus de précisions sur une partie de l'objet soit pour obtenir un angle de vue plus important. Les caméras sont généralement de haute définition sans autre spécificité particulière. Elles sont reliées à des moyens de traitement d'images permettant de réaliser les différentes étapes mathématiques du procédé. Le traitement d'images est effectué à partir d'images définies par des niveaux de gris. Autrement dit, on utilise uniquement l'information de luminance des images.

Les différentes fonctions mathématiques utilisées sont connues de l'homme du métier et ne nécessitent pas de ressources logicielles autres que celles déjà utilisées dans le domaine technique de la CIN globale.

Le calibre est disposé dans un espace référencé dans un repère tridimensionnel $(X,Y,Z)$. Les deux plans-images des caméras sont référencés dans deux repères bidimensionnels notés $(x_r,y_r)$ et $(x_l,y_l)$.

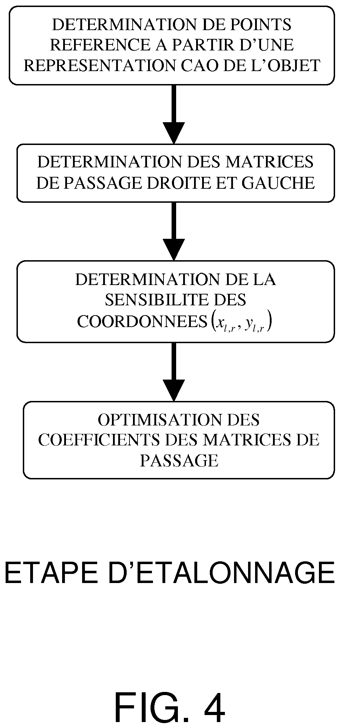

Les différentes sous-étapes de l'étalonnage sont représentées en figure 4. Dans une première sous-étape, on détermine des points de référence. Le calibre étant en place, on détermine au moins six points sur le calibre dont les coordonnées sont connues et issues de la représentation paramétrique de l'objet. Chaque point a comme coordonnées tridimensionnelles $(X_i,Y_i,Z_i)$. A chaque point de l'objet, correspond un couple de points dans les deux plans-images droit et gauche notés respectivement $(x_r,y_r)$ et $(x_l,y_l)$.

Dans une seconde sous-étape, on détermine les matrices de passage $M_l$ et $M_r$. On a les relations suivantes :

$$\begin{pmatrix} l_l x_l \\ l_l y_l \\ l_l \end{pmatrix} = M_l \begin{pmatrix} X \\ Y \\ Z \\ 1 \end{pmatrix} \quad \text{et} \quad \begin{pmatrix} l_r x_r \\ l_r y_r \\ l_r \end{pmatrix} = M_r \begin{pmatrix} X \\ Y \\ Z \\ 1 \end{pmatrix} \qquad \text{Relation 2}$$

$l_l$ et $l_r$ étant les facteurs d'échelle existant entre les plans-image et le repère de l'objet liés en particulier aux grandissements des optiques des caméras, les matrices $M_l$ et $M_r$ étant les deux matrices de passages entre le repère tridimensionnel de l'objet et ceux bidimensionnels des plans-image. Plus précisément, si $m_{ij}^{l,r}$ sont les paramètres des deux matrices $M_l$ et $M_r$, on obtient la relation suivante :

$$\begin{cases} l_{r} x_{l,r} = m_{11}^{l,r} X + m_{12}^{l,r} Y + m_{13}^{l,r} Z + m_{14}^{l,r} \\ l_{r} y_{l,r} = m_{21}^{l,r} X + m_{22}^{l,r} Y + m_{23}^{l,r} Z + m_{24}^{l,r} \\ l_{r} = m_{31}^{l,r} X + m_{32}^{l,r} Y + m_{33}^{l,r} Z + m_{34}^{l,r} \end{cases} \qquad \text{Relation 3}$$

La relation 3 peut encore être mise sous la forme de la relation 4

$$\begin{cases} x_{l,r} = \dfrac{m_{1i}^{l,r} \overline{X}_i}{l_{l,r}} \\[2ex] y_{l,r} = \dfrac{m_{2i}^{l,r} \overline{X}_i}{l_{l,r}} \end{cases} \qquad \text{Relation 4}$$

dans laquelle les $\overline{X}_i$ sont les coordonnées homogènes des vecteurs $(X,Y,Z,1)$. 24 paramètres $m_{ij}^{l,r}$ sont donc à déterminer correspondant aux 12 paramètres de la matrice $M_l$ et aux 12 paramètres de la matrice $M_r$. En pratique, il est nécessaire de déterminer 22 paramètres dans la mesure où tous les paramètres sont déterminés à une constante multiplicative près.

Dans une troisième sous-étape, on détermine la sensibilité des coordonnées $(x_{l,r}, y_{l,r})$ aux paramètres des matrices de passage. Cette sensibilité a la forme suivante:

$$dx_{l,r} = dx_{l,r}(\tilde{m}_{ij}) + \frac{\partial dx_{l,r}}{\partial m_{ij}} dm_{ij} \qquad \text{Relation 5}$$

Dans cette relation, le terme $dx_{l,r}$ correspond aux déplacements apparents des points images dans les deux plans images si l'on modifie un des paramètres $m_{ij}^{l,r}$ des matrices de transformation.

Dans une quatrième sous-étape d'optimisation, on affine la détermination des coefficients des matrices de passage.

La première image est décrite par une première fonction $f(x_l)$ dépendant des coordonnées spatiales $x_l$ prises dans le premier plan image et la seconde image étant décrite par une seconde fonction $g(x_r)$ dépendant des coordonnées spatiales prises dans le second plan image, la première et la seconde fonction étant représentatives de la variation des niveaux de gris en chaque point du premier et du second plan-image. La conservation des niveaux de gris d'une image à l'autre implique que, pour un couple de points appartenant aux deux plans-image et représentant le même point de l'objet, que :

$$f(x_l + dx_l) = g(x_r + dx_r) \qquad \text{Relation 6}$$

Au prix d'un développement de Taylor qui fait partie des méthodes classiques utilisées dans les procédés CIN par approche globale, la relation 6 devient la relation 7 ci-dessous :

$$f(x_1) + \nabla f.dx_l = g(x_r) + \nabla g.dx_r \qquad \text{Relation 7}$$

Le résidu de corrélation T existant entre la première fonction et la seconde fonction est calculé sur la base de fonctions scalaires de la représentation paramétrique de la surface de l'objet. Il vaut :

$$T = \int (f(x_l) - g(x_r))^2 dudv \qquad \text{Relation 8}$$

Une procédure itérative est implémentée de façon à minimiser ce résidu. Cette procédure s'apparente à celle mentionnée dans l'article de Gilles Bernard, François Hild et Stéphane Roux publié dans « Experimental Mechanics 46(2006) 789-804 » et déjà cité dans cette description. La modification essentielle étant que la base de fonction choisie est ici issue du modèle projectif et de la forme du calibre et non des fonctions de forme par éléments-finis.

Le procédé d'étalonnage ci-dessus s'applique au prix d'adaptations à la portée de l'homme du métier aux phases d'appariement spatial ou aux phases d'appariement temporel de procédés utilisant la stéréocorrélation ou la Corrélation d'Images Numériques CIN-3D. Une régularisation temporelle supplémentaire peut être effectuée en vue d'une détermination spatiotemporelle des champs de déplacements 3D surfaciques.

Les avantages du procédé selon l'invention sont nombreux. On citera entre autres : moins de variables à déterminer et donc une moindre incertitude sur les résultats, maîtrise de cartes de résidus qui améliore la qualité de la représentation, régularité du champ, absence d'étapes de lissage ou de filtrage des champs de déplacement. D'autre part, un champ dense de résidus permet d'évaluer la qualité de la détermination des différents degrés de liberté cinématiques.

## Revendications

**1.** Procédé de mesures tridimensionnelles d'un objet (O) par stéréo-corrélation, ledit procédé étant mis en oeuvre par au moins deux caméras reliées à des moyens de traitement d'images, lesdites caméras étant positionnées de façon à donner au moins une première image et une seconde image de l'objet vu sous au moins deux angles différents, les moyens de traitement d'images agencés de façon à déterminer tout ou partie des coordonnées tridimensionnelles dudit objet, ledit procédé comportant au moins deux étapes :

- Une première étape d'étalonnage dans laquelle un calibre de forme connue étant disposé dans le champ des caméras, les moyens de traitement calculent les au moins deux matrices de passage liant les coordonnées tridimensionnelles prises dans le repère du calibre aux coordonnées bidimensionnelles prises dans les au moins deux repères de la première image et de la seconde image dudit calibre ;

- Une seconde étape d'appariement spatial dans laquelle l'objet à mesurer étant disposé dans le champ des caméras, les moyens de traitement déterminent l'ensemble du champ de déplacement existant entre les au moins deux images dudit objet à mesurer, permettant d'obtenir la différence la plus faible possible entre les dites images;

**caractérisé en ce que**, la surface du calibre possédant une première représentation paramétrique, la surface de l'objet possédant une seconde représentation paramétrique, ladite première représentation paramétrique étant une première représentation mathématique de la surface du calibre ayant la forme d'une première décomposition sur une base de fonctions scalaires et la dite seconde représentation paramétrique étant une seconde représentation mathématique de la surface de l'objet ayant la forme d'une seconde décomposition sur une base de fonctions scalaires, ladite première représentation paramétrique est mise en oeuvre lors de la première étape d'étalonnage et ladite seconde représentation paramétrique est mise en oeuvre lors de la seconde étape d'appariement spatial.

2. Procédé de mesures tridimensionnelles d'un objet selon la revendication 1, **caractérisé en ce que**, le procédé comporte une troisième étape d'appariement temporel pendant laquelle une pluralité de couples de premières et de secondes images sont enregistrées simultanément à des instants différents et traitées par les moyens de traitement des images.

3. Procédé de mesures tridimensionnelles d'un objet selon la revendication 2, **caractérisé en ce que** la représentation paramétrique est également mise en oeuvre lors de la troisième étape d'appariement temporel.

4. Procédé de mesures tridimensionnelles d'un objet selon l'une des revendications précédentes, **caractérisé en ce que**, lors de la première étape d'étalonnage, l'objet est son propre calibre.

5. Procédé de mesures tridimensionnelles d'un objet selon l'une des revendications précédentes, **caractérisé en ce que** le calibre comporte un motif composé de taches blanches et noires de forme et de répartition déterministe ou aléatoire.

6. Procédé de mesures tridimensionnelles d'un objet selon l'une des revendications précédentes, **caractérisé en ce que**, la première image étant décrite par une première fonction dépendant des coordonnées spatiales prises dans le premier plan image et la seconde image étant décrite par une seconde fonction dépendant des coordonnées spatiales prises dans le second plan image, la première et la seconde fonction étant représentatives de la variation des niveaux de gris en chaque point du premier et du second plan-image, l'optimisation des coefficients des deux matrices de passage est effectuée au moyen d'un algorithme dont la fonction est de minimiser le résidu de corrélation existant entre la première fonction et la seconde fonction, le champ de déplacement apparent étant calculé sur la base de fonctions scalaires de la représentation paramétrique de la surface de l'objet et du modèle projectif de l'objet.

7. Procédé de mesures tridimensionnelles d'un objet selon l'une des revendications précédentes, **caractérisé en ce que** la représentation paramétrique est composée de splines ou de B-splines ou de NURBS ou est une représentation de Bézier.

8. Procédé de mesures tridimensionnelles d'un objet selon la revendication 7, **caractérisé en ce que** la base de fonctions scalaires est constituée de polynômes de Bernstein.

## Patentansprüche

1. Verfahren für dreidimensionale Messungen eines Objekts (O) durch Stereokorrelation, wobei das Verfahren durch mindestens zwei Kameras umgesetzt wird, welche mit Bildbearbeitungsmitteln verbunden sind, wobei die Kameras so positioniert sind, dass sie mindestens ein erstes Bild und ein zweites Bild des Objekts aus mindestens zwei unterschiedlichen Winkeln liefern, wobei die Bildbearbeitungsmittel so gestaltet sind, dass sie die gesamten oder ein Teil der dreidimensionalen Koordinaten des Objekts bestimmen, wobei das Verfahren mindestens zwei Schritte beinhaltet:

- einen ersten Schritt des Kalibrierens, bei welchem, da ein Kaliber bekannter Form im Feld der Kameras angeordnet ist, die Bearbeitungsmittel die mindestens zwei Übergangsmatrizes berechnen, welche die dreidimensionalen Koordinaten, die im Koordinatensystem des Kalibers aufgenommen werden, mit den zweidimensionalen Koordinaten verbinden, welche in den mindestens zwei Koordinatensystemen des ersten Bildes und des zweiten Bildes des Kalibers aufgenommen werden;
- einen zweiten Schritt der räumlichen Paarung, bei welchem, da das zu messende Objekt im Feld der Kameras angeordnet ist, die Bearbeitungsmittel das gesamte vorhandene Bewegungsfeld zwischen den mindestens zwei Bildern des zu messenden Objekts bestimmen, wodurch eine kleinstmögliche Differenz zwischen den Bildern erzielt werden kann;

**dadurch gekennzeichnet, dass**, da die Fläche des Kalibers eine erste parametrische Darstellung besitzt, die Fläche des Objekts eine zweite parametrische Darstellung besitzt, die erste parametrische Darstellung eine erste mathematische Darstellung der Fläche des Kalibers ist, welche die Form einer ersten Zerlegung auf einer Grundlage von skalaren Funktionen besitzt und die zweite parametrische Darstellung eine zweite mathematische Darstellung der Fläche des Objekts ist, welche die Form einer zweiten Zerlegung auf einer Grundlage von skalaren Funktionen besitzt, die erste parametrische Darstellung beim ersten Schritt des Kalibrierens umgesetzt wird und die zweite parametrische Darstellung beim zweiten Schritt der räumlichen Paarung umgesetzt wird.

2. Verfahren für dreidimensionale Messungen eines Objekts nach Anspruch 1, **dadurch gekennzeichnet, dass** das Verfahren einen dritten Schritt der zeitlichen Paarung beinhaltet, während welchem eine Vielzahl von Paaren von ersten und von zweiten Bildern gleichzeitig zu unterschiedlichen Zeitpunkten aufgezeichnet und durch die Bildbearbeitungsmittel bearbeitet werden.

3. Verfahren für dreidimensionale Messungen eines Objekts nach Anspruch 2, **dadurch gekennzeichnet, dass** die parametrische Darstellung ebenfalls beim dritten Schritt der zeitlichen Paarung umgesetzt wird.

4. Verfahren für dreidimensionale Messungen eines Objekts nach einem der vorhergehenden Ansprüche, **dadurch gekennzeichnet, dass** beim ersten Schritt des Kalibrierens das Objekt sein eigenes Kaliber ist.

5. Verfahren für dreidimensionale Messungen eines Objekts nach einem der vorhergehenden Ansprüche, **dadurch gekennzeichnet, dass** das Kaliber ein Motiv beinhaltet, welches aus weißen und schwarzen Flecken mit deterministischer oder willkürlicher Form und Verteilung gebildet wird.

6. Verfahren für dreidimensionale Messungen eines Objekts nach einem der vorhergehenden Ansprüche, **dadurch gekennzeichnet, dass**, da das erste Bild durch eine erste Funktion beschrieben wird, welche von den räumlichen Koordinaten abhängt, welche in der ersten Bildebene aufgenommen wurden und das zweite Bild durch eine zweite Funktion beschrieben wird, welche von den räumlichen Koordinaten abhängt, welche in der zweiten Bildebene aufgenommen wurden, wobei die erste und die zweite Funktion jeweils die Variation der Graufstufen an jedem Punkt der ersten und der zweiten Bildebene darstellt, die Optimierung der Koeffizienten der beiden Übergangsmatrizes mit Hilfe eines Algorithmus erfolgt, dessen Funktion darin besteht, den vorhandenen Korrelationsrest zwischen der ersten Funktion und der zweiten Funktion zu minimieren, wobei das scheinbare Bewegungsfeld auf der Grundlage von skalaren Funktionen der parametrischen Darstellung der Fläche des Objekts und des projektiven Modells des Objekts berechnet wird.

7. Verfahren für dreidimensionale Messungen eines Objekts nach einem der vorhergehenden Ansprüche, **dadurch gekennzeichnet, dass** die parametrische Darstellung aus Splines oder B-Splines oder NURBS gebildet wird oder eine Bezier-Darstellung ist.

8. Verfahren für dreidimensionale Messungen eines Objekts nach Anspruch 7, **dadurch gekennzeichnet, dass** die Grundlage von skalaren Funktionen aus Bernstein-Polynomen gebildet wird.

**Claims**

1. A method of three-dimensional measurement of an object (O) by stereo-correlation, said method being implemented by at least two cameras connected to image processing means, said cameras being positioned so as to give at least a first image and a second image of the object seen from at least two different angles, the image processing means being arranged so as to determine all or part of the three-dimensional coordinates of said object, said method including at least two steps:

- a first step of calibration wherein, a template of known shape being arranged in the field of the cameras, the processing means compute the at least two transfer matrices linking the three-dimensional coordinates captured in the reference frame of the template with the two-dimensional coordinates captured in the at least two reference frames of the first image and of the second image of said template;

- a second step of spatial matching wherein, the object to be measured being arranged in the field of the cameras, the processing means determine the whole displacement field existing between the at least two images of said object to be measured, making it possible to obtain the smallest possible difference between said images;

**characterized in that**, the surface of the template having a first parametric representation, the object surface having a second parametric representation, said first parametric representation being a first mathematical representation of the surface of the template having the form of a first decomposition over a scalar function basis, and said second parametric representation being a second mathematical representation of the object surface having the form of a second decomposition over a scalar function basis, said first parametric representation is implemented in the first calibration step and said second parametric representation is implemented in the second spatial matching step.

2. The method of three-dimensional measurement of an object as claimed in claim 1, **characterized in that** the method includes a third step of temporal matching during which a plurality of pairs of first and second images are stored simultaneously at different instants and processed by the image processing means.

3. The method of three-dimensional measurement of an object as claimed in claim 2, **characterized in that** the parametric representation is also implemented during the third temporal matching step.

4. The method of three-dimensional measurement of an object as claimed in one of the preceding claims, **characterized in that**, in the first calibration step, the object is its own template.

5. The method of three-dimensional measurement of an object as claimed in one of the preceding claims, **characterized in that** the template includes a pattern composed of black and white marks of a deterministic or random shape and distribution.

6. The method of three-dimensional measurement of an object as claimed in one of the preceding claims, **characterized in that**, the first image being described by a first function depending on the spatial coordinates captured in the first image plane and the second image being described by a second function depending on the spatial coordinates captured in the second image plane, the first and the second function being representative of the variation of the gray levels at each point of the first and the second image plane, the optimization of the coefficients of the two transfer matrices is carried out by means of an algorithm, the function of which is to minimize the residual correlation existing between the first function and the second function, the apparent displacement field being computed over the scalar function basis of the parametric representation of the object surface and of the projective model of the object.

7. The method of three-dimensional measurement of an object as claimed in one of the preceding claims, **characterized in that** the parametric representation is composed of splines or B-splines or NURBS or is a Bezier representation.

8. The method of three-dimensional measurement of an object as claimed in claim 7, **characterized in that** the scalar function basis is composed of Bernstein polynomials.

FIG. 1

FIG. 2

# FIG. 3

DETERMINATION DE POINTS REFERENCE A PARTIR D'UNE REPRESENTATION CAO DE L'OBJET

DETERMINATION DES MATRICES DE PASSAGE DROITE ET GAUCHE

DETERMINATION DE LA SENSIBILITE DES COORDONNEES $(x_{l,r}, y_{l,r})$

OPTIMISATION DES COEFFICIENTS DES MATRICES DE PASSAGE

# ETAPE D'ETALONNAGE

# FIG. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080123937 A

**Littérature non-brevet citée dans la description**

- «Finite-element » displacement fields analysis from digital images : Application to Portevin-Le Châtelier bands ». *Experimental Mechanics,* 2006, vol. 46, 789-804
- Characterization of necking phenomena in high speed experiments by using a single camera. *EUR-ASIP Journal on Image and Video Processing,* 2010, 215956
- **T.MIYAKE et al.** Online Stereo Measurement System for a Sand Mold. *SICE-ICASE International Joint Conférence,* 2006
- **GILLES BERNARD ; FRANÇOIS HILD ; STÉPHANE ROUX.** *Experimental Mechanics,* 2006, vol. 46, 789-804